# EUROPEAN PATENT SPECIFICATION

(11) **EP 1 385 741 B1**
(45) Date of publication and mention of the grant of the patent: **11.01.2006**
(21) Application number: 01932805.3
(22) Date of filing: 01.05.2001
(51) Int. Cl.: B65B 1/04

(54) **FUEL DISPENSING NOZZLE CONSTRUCTION**
KRAFTSTOFFABGABEDÜSENAUSFÜHRUNG
REALISATION DE BUSES DE DISTRIBUTION DE CARBURANT

(43) Date of publication of application: 04.02.2004
(73) Proprietor: Directcast Network, LLC., Midland, MI 48640 (US)
(72) Inventor: FERGUSON, James, D., Mt. Pleasant, MI 48858 (US); AMBROSE, Alan, S., Midland, MI 48642 (US); BAKER, Glwynn, R., Frankenmuth, MI 48734 (US); McKINLEY, Mark, J., Kawkawlin, MI 48631 (US); MISHLER, Timothy, Beaverton, MI 48612 (US)
(74) Representative: Hammersley, John
(86) International application number: PCT/US2001/013989
(87) International publication number: WO 2002/087969

(56) References cited:
- DE-A- 4 100 214
- US-A- 3 852 576
- US-A- 5 717 374
- US-A- 5 859 416
- US-A- 5 890 718
- US-A- 5 913 180
- US-A- 6 024 142

## Description

### BACKGROUND OF THE INVENTION

The present invention relates to the dispensing of fluid, and in particular, to the controlled dispensing of liquid fuel through a nozzle assembly. The present invention relates to nozzle assemblies for pumping mechanisms used for dispensing fuel for automobiles. The present invention further relates to fuel dispensing devices equipped with systems that enable anyone using such devices to fuel an automobile with the ability to participate in passive or interactive activities.

Automobile fuels, such as gasoline and diesel fuel, are commonly marketed at commercial fuel outlets, such as service stations and convenience stores. Such fuels conventionally have been delivered through fuel dispensing systems. Such a system typically includes a normally statically positioned pumping mechanism, commonly called a "pump," together with a hose and a nozzle. When the system is not in use, the nozzle normally is positioned in a designated port or resting region on the pump, and when use is desired, the nozzle is removed from its resting position on the pump. The system normally provides for filling a vehicle fuel tank with fuel through the nozzle by actuating a pull lever or trigger mechanism located in a handle of the nozzle to open a valve located within that nozzle. As a result, fuel can be pumped from a storage tank, through the hose, through the nozzle, out of a spout and into the fuel tank of an automobile. Fuel dispensing system units have been designed so as to be aesthetically pleasing, provide a wide variety of automated functions, and be readily operable by consumers with relative ease. Representative components of typical fuel pumping systems are forth in U.S. Patent Nos. 4,095,626 to Healy; 4,566,504 to Furrow et al. and 4,687,033 to Furrow et al.

At so-called "self-service" gasoline stations, the customer removes the nozzle from the pump, actuates the pump and operates the nozzle so as to dispense the desired amount of fuel into the fuel tank of his/her vehicle. Service station and convenience store operators have used portions of the static pump regions of fuel dispensing systems in order to provide information to the customer and to receive information from the customer. For example, pumps have been equipped with audio speakers, video display units, television screens, static signage, microphones, push buttons, printing units, and the like. As such, store operators can inform customers of products and prices, relay messages to customers, provide entertainment to customers, relay information regarding pricing and purchases, print receipts and coupons, and the like. Store operators also can provide a way for customers to engage in games that allow the customers to be entertained or to play for a prize or incentive. In addition, the customer can make fuel purchase selections and provide information to the store operator by pushing buttons in response to prompted questions or by voice through a microphone. Furthermore, at the so-called "pay at the pump" establishments, a customer using a credit card can complete a purchase using a card reader positioned within the pump (e.g. by using a magnetic readable, embedded chip or radio frequency activated credit card). Representative fuel dispensing system units are available from Gilbarco, Inc. See, also, US Patent No. 5,859,416 to Gatto and German patent application 4,100,214.

Numerous nozzle constructions for use with fuel dispensing systems are commercially available. Various nozzle assemblies are commercially available through Saber Equipment Corporation, Dover Corporation, Healy Systems Inc., Emco Wheaton Retail Corporation, Catlow Incorporated and Husky Corporation. Numerous nozzle designs and features have been described in the patent literature. See, for example, US Patent Nos. 4,453,578 to Wilder; 4,682,714 to Wood; 4,993,460 to Robinson et al; 5,007,468 to Wilder et al; 5,127,451 to Fink Jr. et al; 5,236,984 to Kaplan et al; 5,267,592 to Koch et al; 5,273,087 to Simpson et al; 5,365,984 to Simpson et al and 5,992,479 to Simpson. Typical nozzle assemblies have die cast aluminium body construction; and certain components, such as the lever actuation assemblies, have been manufactured from steel. Typical commercially available nozzle assemblies weigh in excess of about 0.907 Kg (2 pounds) and frequently weigh from about 1.36 Kg (3 pounds) to about 1.82 Kg (4 pounds). For example, the NE Elite Automatic Nozzle which is available from Catlow, Inc. weighs approximately 1 Kg (2.2 pounds) the Husky X Mate Nozzle which is available from Husky Corporation weighs approximately 1.09 Kg (2.4 pounds), the Husky V Nozzle weighs approximately 1.81 Kg (4 pounds), and the Model 800 by Healy Systems, Inc. weighs approximately 1.59 Kg (3.5 pounds).

Certain nozzle assemblies possess hand guards, levers and body sections that can be equipped with covers that are manufactured from plastic materials. Typically, such covers or "scuff guards" are snapped on, fitted over or screwed on to certain regions of the nozzle assembly. Such covers can be manufactured from pliable nylon materials or hard plastic materials. Representative nozzle assemblies equipped with various plastic components are commercially available as A4500, A4505, A4005 and A4015 from Emco Wheaton Retail Corporation; Model 11A from Dover Corporation; Model 600 from Healy Systems, Inc.; and Husky XS Leader, Husky X Mate, Husky Amoca V-1, Convac, Husky V-34 and Husky V nozzles from Husky Corporation. Certain nozzle assemblies, such as the NE Elite Automatic Nozzle, the Inverted Vapor Recovery Nozzle and the Elite Pre-Pay Nozzle (available from Catlow, Inc.) possess body assemblies that are manufactured from cast aluminum, but lever and hand guard portions that are manufactured from tough nylon materials. A nozzle assembly possessing a thermoplastic outerbody assembly has been available as Saber 1.0, Flow and Saber 1.5, Display from Saber Equipment Corp. See, also, U.S. Patent No. 5,184,309 to Simpson et al. In addition, see U.S. Patent Nos. 5,184,309 to Simpson et al.; 5,363,889 to Simpson et al. and Des. 355,704 to Simpson et al.

Recently, several references have proposed using nozzle assemblies as venues for sources of messages. See, for example, those features set forth in U.S. Patent Nos. 4,465,209 to Wilder; 5,058,637 to Fell; 5,458,170 to Ferguson; 5,806,217 to Alvern; 5,810,063 to Alvem; 5,815,967 to Alvem; 5,865,340 to Alvem; 5,862,617 to Alvem; and 5,887,367 to Alvern. Of particular note are the Fueling Talker electronic advertising boots that are marketed by DirectCast Network, LLC. Those boots are fitted onto the nozzles of gasoline dispensing systems. See, also, U.S. Patent No. 5,184,309 to Simpson et al. which discloses a nozzle according to the preamble of independent claim 7 as well as those nozzle assemblies that are commercially available as Saber 1.0, Flow and Saber 1.5, Display from Saber Equipment Corp. See, also, UK Patent Application 2,147,273.

It would be desirable to provide nozzle assemblies (and particularly nozzle assemblies having features that provide the user thereof with the ability to engage in interactive activities) that can be readily incorporated as components of fuel dispensing systems, and particularly in the types of dispensing systems used at self-service gasoline stations and convenience stores.

### SUMMARY OF THE INVENTION

According to the present invention there is provided a boot adapted to fit over at least a portion of a vehicular fuel dispensing nozzle characterised in that the boot comprises means for providing an interactive game.

Also according to the present invention there is provided a vehicular fuel dispensing noale assembly characterised in that the nozzle comprises means for providing an interactive game.

The present invention relates to a nozzle construction or assembly for use with a fluid dispensing system, and particularly a fluid system that includes a fuel dispenser and a fuel dispensing hose. Such a type of nozzle assembly includes a connection means for allowing connection of the nozzle assembly to the hose and for allowing fluid flowing through the hose to flow into the nozzle assembly. That nozzle assembly also includes a housing portion that acts as a handle in order that the assembly can be grasped, held and handled by one hand of a user thereof. That nozzle assembly also includes a trigger mechanism, and such trigger mechanism typically is located in the housing portion in order that a user can grasp the assembly and operate the trigger mechanism with the same hand simultaneously. That nozzle assembly also includes a dispensing valve, and that dispensing valve is associated with the trigger mechanism in order that operation of the trigger mechanism provides opening and closure of the dispensing valve. That nozzle assembly also includes a spout, preferably generally tubular in nature, for allowing fluid dispenses through the nozzle assembly to be delivered to the desired location (eg, a container, vehicle fuel tank, or other suitable receptacle). A preferred nozzle assembly also includes a shut-off mechanism for ceasing the flow of fluid through the nozzle assembly when the receptacle being filled with fluid approaches its capacity. A preferred nozzle assembly also includes a mechanism for collecting fuel vapors during those periods of time that the nozzle assembly is being used to deliver fuel.

A prefererred vehicular fuel nozzle assembly in accordance with this invention includes additive features, such as features that allow anyone using those nozzle assemblies to participate in passive or interactive activities. Typical users of such nozzle assemblies are customers at a gasoline station or convenience store. The nozzle assembly can be adapted to provide messages that are available for the user's visual inspection. The nozzle assembly also can provide sounds or an audio message to the user. Another nozzle assembly provides information in the form of a "hard" medium, such as a printed paper receipt or coupon. Such features are particularly desirable in order to direct messages, information, service features or advertising to customers of self-serve automobile fuel.

The present invention relates to a fuel dispensing device that is equipped with a system that enables anyone using the device to participate in an interactive game, receive receipts or coupons, receive information from an illuminated display or otherwise interact with the device, at essentially the same time that the device is being used to dispense fuel into a vehicle. According to certain embodiments, the nozzle assemblies of the present invention incorporate systems that provide for illumination for advertisements, gathering of information, communicating of information, or delivery of coupons or tickets that give anyone using such an assembly special incentives or access to promotions, gifts or prizes. Such an aspect of this invention provides a means for focusing the attention of a self-serve gasoline customer towards the nozzle assembly and the processes associated with the fueling of a vehicle.

The system can collect, store and transmit collected data and information, such as the frequency of use of the nozzle assembly.

The present invention relates to a nozzle assembly capable of providing the user to engage in interactive games, as well as to a boot adapted to incorporate those additive features and designed so as to fit on a nozzle assembly. For example, a fuel dispensing nozzle assembly comprises a spout, a handle for the spout, and a boot adapted for close conforming fit over at least a portion of the fuel dispensing nozzle. The boot incorporates a housing; and that housing preferably is integrally surmounted on the top region of the boot. The housing incorporates a system for providing at least one interactive game. For example, the housing can comprise a system for delivering a video message (e.g., as a graphic display), a system for illuminating relevant regions of the nozzle assembly, a system for conveying information (e.g., a push-button system), a system for delivering coupons, or any combination of the foregoing. Preferred nozzle assemblies also include a system for delivering a sound or an audio message. Also preferred are systems that incorporate a storage means for pre-printed coupons and a delivery means for those pre-printed coupons; or a coupon printer and a delivery means for printed coupons.

Present invention relates to a boot adapted for fit over at least a portion of a fuel dispensing nozzle for a vehicle, wherein the boot comprises a system for providing an interactive game. That boot also can include components for conveying audio sounds or information. In one embodiment the present invention relates to such a boot further comprising a system for delivering coupons, as well as a system for conveying sounds or audio information. The present invention further relates to a boot comprising a system for providing an interactive game and a system for delivering coupons. Any of those boots can possess a component that provides illumination within or around those boots during normal conditions of use, and those boots can include components for providing display of video messages. The system can collect, store and transmit collected data and information, such as the frequency of use of the nozzle assembly equipped with the boot.

In another embodiment, the present invention relates a method for providing a user of a self service gasoline pump with reason to travel to a location remote from the pump. As such, the method involves having the convenience store or gasoline station proprietor provide a self service gasoline pump possessing a nozzle assembly. The pump is provided with a system that allows the user to engage in an interactive activity, and that system can be provided through the nozzle assembly. The user of the pump is provided a prompt, causing that user to engage in an interactive game. The prompt and interactive game is provided through the nozzle assembly.

For example, the user that travels to the store or gasoline station may be awarded a prize.

### BRIEF DESCRIPTION OF THE DRAWINGS

Fig. 1 is a full side view of a gasoline dispensing nozzle assembly of the present invention, the assembly including a nozzle frame and a boot shown partially in phantom so as to show components housed within that boot;
Fig. 2 is an enlarged full side view of the boot (shown partially in phantom) representative of the present invention;
Fig. 3 is a front end view of the boot representative of the present invention;
Fig. 4 is a cross-sectional side view of the boot taken along lines 4-4 in Fig. 3;
Fig. 5 is an enlarged top view of the nozzle assembly shown in Fig. 1 showing the face of an interactive game system having the form of a roulette-type game;
Fig. 6 is a top view of the nozzle assembly shown in Fig. 1 showing the face of an alternative interactive system having the form of a selection system;
Fig. 7 is a top view of the nozzle assembly shown in Fig. 1 showing the face of an alternative interactive system adapted to carry out a survey;
Fig. 8 is a top view of a nozzle assembly shown in Fig. 1 (shown partially in phantom) showing the face of an alternative interactive system adapted to provide a coupon;
Fig. 9 is a cross-sectional side view of the boot shown in Fig. 8 taken along lines 8-8;
Fig. 10 is a top view of the nozzle assembly shown in Fig. 1 showing the face of an alternative interactive system adapted to provide a visual message;
Fig. 11 is a cross-sectional side view of the boot shown in Fig. 10 taken along lines 11-11;
Fig. 12 is a cross-sectional end view of the boot shown in Fig. 10 taken along lines 12-12;
Figs. 13-14 are full side views of a gasoline dispensing nozzle assembly of the present invention, the assembly including a nozzle frame and additive components of the present invention;
Fig. 15 is a schematic diagram of the electronic circuitry including integrated circuit components useful for representative nozzle assemblies of the present invention; and
Fig. 16 is a full side view of a gasoline dispensing nozzle assembly of one aspect of the present invention.

### DETAILED DESCRIPTION OF THE PREFERRED EMBODIMENTS

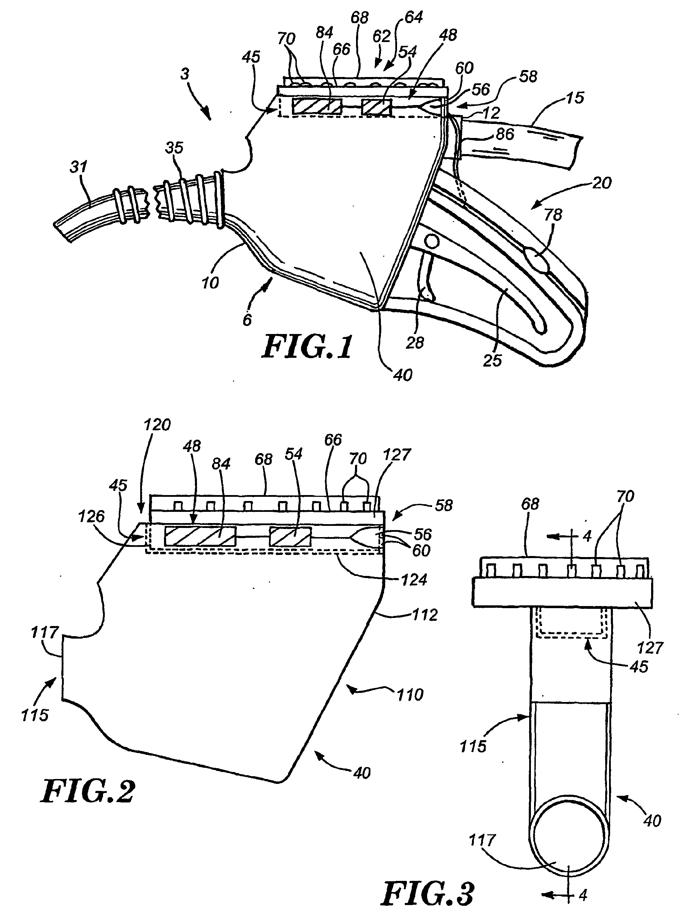

Referring to Fig. 1, there is shown a representative vehicular fuel nozzle assembly 3 of the present invention. The nozzle assembly includes a standard fuel dispensing nozzle 6 including a frame 10, and a connector 12 to a hose 15 from a pump (not shown), in order that fuel from the pump can pass from the pump through the hose to within regions of the nozzle frame 10. Numerous types of fuel dispensing nozzles are commercially available. The nozzle assembly 3 includes a handle region 20 that is adapted in order that anyone using the nozzle assembly can readily grasp that assembly. The assembly also includes a trigger 25 or other suitable means for controlling the flow of fuel through the assembly, as well as an optional manually operated control lever 28 that is in mechanical communication with a shut off apparatus within the nozzle frame. A generally tubular spout 31 provides a means for directing the dispensing of fuel to the desired location. An optional wound wire 35 around the spout 31 provides a simple way to maintain positioning of the spout within a fuel receptacle (not shown). Typically, the spout 31 is composed of a metal material.

A boot 40 of the nozzle assembly 3 (which is shown partially in phantom) is shown as having a one-piece frame, and the boot is shown fitting over the nozzle frame 10 at a region downstream from the trigger 25, but upstream from a significant length of the spout 31. If desired, it is possible for the boot 40 to fit over the nozzle frame 10 and over a portion of that region of the hose 15 that is immediately adjacent the upstream end of the nozzle frame. That boot 40 has a close conforming fit over a portion of the length of the fuel dispensing nozzle 6; and that boot possesses a housing 45 incorporating a communication system 48. That communication system 48 incorporates various communication components 54 that provide the ability for the user of the nozzle system to participate in an activity. The communication components 54 can include one or more programmed electronic circuit boards, or other means for allowing the user of the nozzle assembly to receive and/or convey data or information. As such, passive, interactive and informational functions can be performed in response to the use of the nozzle assembly. Representative communication components 54 include an interactive game system, a coupon dispensing system, a system for delivering a sound or an audio message, a system for providing visual information, and/or an illumination system. As such, games, and quizzes, can be carried out in conjunction with the use of the nozzle assembly 3. The communication system also can include a speaker 56 for providing sounds or an audio message to the user. The communication system also can include, in addition to or in conjunction with the speaker, a microphone (not shown) in order that the user can convey audio information for transmission to a remote location. The back wall or face 58, or other region of the boot, is adapted to have a series of open pores or perforations 60, or is equipped with a mesh, screen or other means to allow sound from the speaker to exit the boot and sound from the user to enter the boot and be picked up by the microphone. Preferably, the speaker 56 faces out the back face 58 of the boot 40 in order that sound emitted by the speaker is directed towards the location of the user.

The top face 62 of the boot 40 possesses a viewing face 64, that in one embodiment possesses a pad or face 66. The pad or face 66 can be decorated with designs, words, numbers, or other printed indicia. A transparent protective cover 68 protects components exposed on the viewing face 64 from being subjected to damage and wear from exposure to natural elements. Representative transparent, protective shield or sealing materials can include a thin sheet of polymethylmethacrylate (e.g., Plexiglas) or polycarbonate (e.g., Lexan). The face 66 of the viewing face 64 includes a plurality of lights 70.

The preferred nozzle assembly 3 also incorporates a switching mechanism 78 for activation and deactivation of the communication system 48. The nozzle assembly also can incorporate a power source 84 for providing the power to operate the various components of the communication system. The switching mechanism 78 is connected to the power source 84 by a conductive wire 86, or other suitable connection means. The switch can be located in the general location shown in Fig. 1, or elsewhere within the nozzle assembly. The switch can be located within the boot, hidden from the view of the user. For example, the switch can be incorporated within the electronic circuitry of the communication components 54.

In a preferred aspect, the various components of the communication system 48 are contained in the boot housing 45 in the form of a removable cartridge. As such, the various electronics of that system, the power source 84, the switching mechanism, and other relevant components can be readily removed from the boot as an integral component for updating, service or replacement. The boot can be appropriately designed so that such a cartridge can remain firmly in place within the boot during normal conditions of use, while the boot can be manipulated so as to allow removal of the cartridge therefrom. In a highly preferred aspect, the various components are modular in nature, and various additive features can be added, removed, interchanged or replaced within a particular nozzle assembly.

The boot 40 is a component that fits over at least a portion of the fuel dispensing nozzle 6. The boot typically is manufactured from a plastic material, such as a thermoset or thermoplastic material. Preferably, the boot is designed to be capable of fitting over the nozzle frame and remain in place, as a result of the design of the shape and size of its one-piece frame. Most preferably, the boot frame is flexible or pliable in a nature, in order that the boot can be slipped and readily fitted on the nozzle frame 10, and generally conform to the overall shape of the nozzle frame over which the boot fits. Representative boot designs and configurations are of the types described in U.S. Patent Nos. 5,058,637 to Fell; 5,458,170 to Ferguson and 5,815,967 to Alvern. Those patents describe boots possessing static message platforms as well as systems for automatically playing messages or sounds. Exemplary boot materials and components, as well as exemplary boot designs are of the types that have been commercially available from DirectCast Network, LLC, Alvern S.A., and M & M Display, Inc.

The boot 40 most preferably has a close conforming (e.g., snug) fit relative to the remaining portion of the nozzle assembly 3. As such, the boot is maintained firmly in place over a desired region or portion of the nozzle frame 10, under normal conditions of use. Typically, the boot is maintained in place by friction fit, and such a design provides an appropriate attachment means for the boot to the front portion of the nozzle frame. As shown, the boot fits over a portion of the nozzle frame in the region of the handle portion where that handle portion meets the spout 31. The boot also can be maintained in place relative to the remaining portion of the nozzle assembly by one or more screws, clips, clamps, tabs, adhesives, or other suitable connection means (not shown). Though less preferred, the boot can have a frame having multiple piece design or configuration. Such a design allows for pieces of the boot frame to be fitted over the fuel dispensing nozzle, and secured in place through the use of fastening devices (e.g., clamps or screws), adhesives, or other suitable assembly means.

Boot systems provide for a particularly desirable way to incorporate, in an efficient and effective manner, the features of the present invention into virtually any nozzle assembly. A boot can be readily designed to fit over and operate in conjunction a nozzle assembly by a selection of the size, shape and configuration of the boot. The boot can be designed so as to be readily fitted over the nozzle assembly, and can be designed so as to be aesthetically pleasing. Boot systems also can be designed to be light in weight, and of a shape so that use of the nozzle assembly is not rendered overly burdensome or complicated.

During use, the user removes nozzle assembly 3 from a fuel pump (not shown), and the extreme end of the spout 31 is inserted into the fueling port of a vehicle (not shown). Systems of the present invention can be activated and deactivated by switching mechanisms. Activation of switch 78 activates components of the communication system in order that the interactive activity can commence. As such, the user is provided with information while the vehicle is being fueled. In addition, the user can engage in the playing of a game while using a nozzle assembly. When, the use of the nozzle assembly 3 is complete because the fueling process is complete, and the spout 31 is removed from the fueling port, the switch 78 within the system is operated to deactivate the system. Suitable timing mechanisms located within the system can provide a desired lag time before the system is activated or deactivated by operation of the switch.

The switching mechanism 78 can vary, and the communication system can be activated and deactivated in a variety of ways. It is desirable for the system to remain deactivated when the fuel pump and nozzle assembly 3 are not in use. This provides maintenance of the power available in the power source 84. The communication system can be manually activated and deactivated by the customer or other personnel associated with the use of the communication components 54 of the communication system 48. The system also can include, as an optional component, at least one fuse (not shown), in order to deactivate the power supply from the power source to other components of the system.

The communication system 48 can be adapted to provide for activation and deactivation of the system from remote locations (i.e., locations physically removed from the fuel pump and fuel nozzle assembly). A manually operated switching mechanism can be located at a remote location, such as within the gasoline station or convenience store. Such a feature can provide activation and deactivation in addition to the previously described switching mechanisms; and such a feature can be used for safety and security reasons. Thus, the operator of a gasoline station or convenience store can activate and deactivate each system from a location remote from the fuel pump (e.g., from within the establishment).

The communication system 48 can be activated and deactivated by the user by employing a push button 78 or other similar means located on or near the nozzle or the pump. The switching mechanism can be a manually operated switch, such as a push-button or toggle switch, located on or near the pump or the nozzle assembly. Representative types of touch pad technologies are described in U.S. Patent No. 5,657,004 to Whittaker et al. The switch also can be activated and deactivated by an electronic pre-programming means and the use of an internally positioned integrated circuit clock (not shown). As such, upon predetermined prompts or activity, the switch can be activated and deactivated in accordance with a switching mechanism controlled by a timing mechanism provided by that clock. The selection and positioning of the switching mechanism can vary, and can be a matter of choice.

In the preferred aspect, a switching mechanism (not shown) located within housing 45 is activated when the nozzle assembly is removed from the nozzle receptacle on the fuel pump (not shown), or when the nozzle assembly is inverted so as to position the spout 31 into the fuel tank; and deactivated when the nozzle assembly is brought to vertical, or near vertical position. That is, movement of the nozzle assembly from the fuel pump receptacle to the fueling port causes the system to be activated. Thus, the communication system can be activated and deactivated by a switching mechanism designed to sense the orientation of the nozzle assembly. Exemplary switching mechanisms are mercury switches, such as those available as Part No. 1800-1 from Assemtech Europe Ltd. Suitable switching mechanisms are employed commercially by DirectCast Network, LLC in its Fueling Talker vehicle fuel nozzle assembly boots.

A timer or motion sensor (not shown) located in the communication system 48 can sense lack of attention relative to the nozzle assembly; and an alarm (not shown) located within the communication system can sound to alert the customer to remove the nozzle from the fueling port of the vehicle to the appropriate receptacle of the fuel pump. Such a safety feature alerts a careless customer not to drive away from the pump with the nozzle still inserted into the fueling port of his/her vehicle. The timer or motion sensor can be provided as part of the electronics within the circuitry of the communication components 54 within the communication system 48. For example, the timer can be incorporated within a microprocessor (not shown).

In a preferred aspect of the present invention, the nozzle assembly 3 includes a small speaker 56, other suitable audio communication means. The speaker provides sounds and audio messages that are provided from circuitry within the communication system. Thus, the speaker can produce the audio output associated with the playback of a pre-recorded message that is stored within the communication system, and/or from a receiver within the communication system. The speaker is appropriately connected with conductive wires (not shown), or other suitable connection means. Most preferably, the audio communication is provided from a source within the nozzle assembly through a speaker located within the nozzle assembly. An exemplary speaker has a 5 watt, 7,000 Hz construction and possesses a mylar cone. Such a type of speaker is commercially available as PR504N-7-8 from RDI Electronics. Suitable audio communication mechanism, and the control therof, are employed commercially by DirectCast Network, LLC in its Fueling Talker vehicle fuel nozzle assembly boots. Other types of audio message system components are described in U.S. Patent Nos. 4,984,098 to Buntsis; 5,624,822 to Vogelman et al. and 5,671,331 to Croley.

Hard wired and wireless systems can be programmed, operated and controlled from locations remote from the fuel dispensing device. In such a manner, information and commands can be transmitted and received over significant distances. Such systems are particularly desirable when the communication system 48 incorporates a microphone (not shown). As such, the user can communicate by voice, and the information that is input through the microphone can be transmitted to a remote location. Selection and operation of an appropriate microphone can be a matter of choice.

The communication system 48 can be hard wired. By this is meant the various electronic signals are transmitted through hardware components, such as electrically conductive materials, or hardware components that are physically connected together to provide transmission of electronic signals. If desired, such signals can be conducted through fiber optic cables, or other suitable transmission means. See, for example, UK Patent Application 2,147,273.

Alternatively, the communication system 48 can be adapted to receive commands and transmit information in a wireless manner. By this is meant that electronic signals can be transmitted and received through electro-magnetic radiation (e.g., radio wave, infrared or microwave signals). As such, communication from the nozzle assembly to a remote location can be accomplished using a system possessing suitable electro-magnetic radiation transmitter and receiver components that are designed to communicate with corresponding receivers and transmitters. Appropriate receiving components most preferably include an antenna. Various wireless systems are described in EDN, February 16, 1998 and U.S. Department of Commerce publication "NTIA Special Publication 95-33 Survey of Rural Information Infrastructure Technologies, September 1995, Wireless Systems and Technology." A wireless system that provides for radio frequency communication to and from the system can incorporate a BSN 6040 Processor and a TRF 6001 Transceiver from Texas Instruments. A wireless local area networking system operating under a Bluetooth protocol that is available from Ericsson also can be employed.

The communication system 48 can incorporate a global positioning system (GPS) (not shown), and as such, the user can prompt questions regarding location. Alternatively, the customer can press a button requesting directions; and while that customer completes fueling his/her vehicle, the request can be conveyed to a central processing location within the gasoline station or convenience store; and a custom map or directions can be printed out for the customer on a printer located within the station or store.

The communication system 48 can include the electronics associated with the reception of the electromagnetic signals associated with wireless telephonic communication. Digital or analog wireless telephonic communication systems also can be employed. As such, information accessible via the Internet, or other computer network system, can be provided to the user of the nozzle assembly. If desired the transmission of the network related information is controlled or provided from a remote source. Such a source can be a central control location, or a location within the immediately associated gasoline station or convenience store. The particular transmission equipment and the programming associated with the delivery and presentation of the desired information from a computer network will be readily apparent, and the selection thereof will be a matter of choice.

In a preferred aspect of the present invention, the nozzle assembly 3 is illuminated, at least to some degree in a relevant region thereof. As such, there is provided lighting via electrical or other illumination or illuminant or luminous system, such as a series of lights 70. Illumination can be provided for example, by lighting on, in, around or behind the game face 64 of the nozzle assembly. The illumination can be provided by electrical based illumination provided by electrical current from a source such as a battery 84. Illumination can be provided by or from fluorescent materials, incandescent materials, ultraviolet or infrared materials, laser sources, fiber optic materials, photosensitive materials, materials possessing dye patterns, chemically reactive systems, holographic materials, electroluminescent materials, photoluminescent materials, photochrominescent materials, bioluminescent materials, sonolumininescent materials, light emitting diodes (LED), field emitter displays (FED), liquid crystal displays (LCD), plasma display panels (PDP), or the like. Such materials are available from commercial sources, and the selection and adaptation for use of those materials, can vary depending upon the display and effect that is desired. See, also, U.S. Patent No. 5,184,309 to Simpson et al. and UK Patent Application 2,147,273. The illumination can be such that an alpha-numeric display (e.g., as through a LCD system) can be provided. Most preferably, the illumination provides a graphic display (e.g., pictures, symbols, and the like). As such, preferred nozzle assemblies include a device for providing a graphic display. If desired, the communications components 54 include a graphic display device to provide visual information as well as an audio system to provide audio messages, and most preferably, the timing associated with the video and audio messages is synchronized. Such synchronization can be accomplished through the use of a microcontroller (not shown).

The nozzle assembly 3 can be equipped with a counter or counting mechanism (not shown), or other means for sensing and recording the use of the nozzle assembly. Of particular interest are counter mechanisms that sense and record the number of times that a nozzle assembly is employed. Thus, for nozzle assemblies providing audio or visual messages, such as advertising, relevant personnel can observe and track the frequency of delivery of that message to customers. Information regarding the number of uses of the nozzle assembly, the various times of day that the nozzle assembly is used, the period of time that the nozzle assembly is used, and other information regarding exposure of the nozzle assembly to customers, can be recorded. That information can be stored within the nozzle assembly itself, or relayed (e.g., by electronic means) to another location, for data collection and analysis.

Counter mechanisms can be mechanical or electronic in operation. Mechanical trip systems typically use a cog that trips a lever resulting in incremental addition with a counting system. Electronic systems typically use an interrupt circuit to activate a counting and storage device. A preferred counter mechanism incorporates an electronic counter that employs a COP 8 Series Micro Controller form National Semiconductor. Such as counter mechanism can detect power activation as a result of activation of a mercury switch, and store the detected information as an incremental activation to a suitable data storage device (e.g., a microprocessor located within the communication system).

The nozzle assembly 3 can be equipped with various other optional features. The nozzle assembly can incorporate an electronic device (not shown) that is capable of sensing electrical ground from the nozzle assembly and through the hose 15. When that device does not sense adequate ground, the nozzle assembly can be rendered inoperable, or alternatively, a warning message (e.g., a warning light or audio warning) can be delivered to the user. As such, a service station operator then can take appropriate steps to repair the pumping mechanism in order that proper grounding of that pumping mechanism is accomplished. Such an optional feature is desirable in that electrical ground is necessary in order to avoid the build up of static electricity that may have the potential to generate heat or spark sufficient to cause ignition of fuel vapors in the vicinity of the pumping mechanism. Other safety devices, such as carbon monoxide monitors, heat sensors, smoke detectors, and the like, can be incorporated into the nozzle assembly. As such, certain environmental conditions can be sensed, and appropriate audio or visual alarms can be activated.

The communication system 48 of the nozzle assembly 3 is rendered operable by a suitable power source 84. Most preferably, the power source is a battery or series of batteries. Batteries can be single use or rechargeable. An exemplary battery includes, for example, a 4.8 volt lithium ion or nickel cadmium rechargeable battery system available from Avex, Inc. Other exemplary batteries are AA alkaline type batteries that are commercially available from Eveready, Duracell or Rayovac. The power source for certain of the components of the system also can include a suitable solar energy power source, which can be used independently or in combination with another internal or external power source. The battery typically is positioned within the housing 45 of the boot 40, and can be positioned within the communication system cartridge. It is desirable for the battery to be located within the boot to be easily accessible, in order that the battery can be readily replaced or recharged. Optionally, the power source can be adapted to receive power from an AC source, particularly for recharging a battery-type power source.

The interactive system of the present invention has a variety of advantages. The system can provide a customer using a device incorporating such a system with increased awareness of products in stock, as well as services and special items for sale. The present invention allows for convenient communication of information directly from and to the current user of the system. As such, a customer can be presented with awareness of a wide range of information, and because of the unique presentation of that information directly to the customer at the pump. Further, the illumination assists in providing an effective means for enhancing the customer's attention to the message being conveyed. The information can be rendered effective, diverse and entertaining (e.g., for recreational or entertainment purposes). Thus, the customer is encouraged to remain in the vicinity of the fuel dispensing nozzle during the time that the nozzle is being used. As such, attention to the dispensing of fuel is maintained, and safety maintained.

The interactive system can allow the proprietors of a convenience store or gasoline station to provide customers at such establishments with reason to travel from the self service gasoline pumps to stores, station buildings, or other locations remote from the pumps. As such, the convenience store or gasoline station proprietor provides a self service gasoline pump possessing a nozzle assembly. The pump and/or nozzle assembly is provided with a system that allows the user with an ability to engage in an interactive game. The user of the pump and the nozzle assembly is provided a prompt, causing that user to engage in an interactive game provided through the nozzle assembly. For example, a communication system associated with the pump can provide the user with an audio message and/or a message that is communicated visually, or the user can be provided with a coupon. The user then can engage in an interactive activity, such as play a game or engage in a survey provided within that communication system. The pump and/or nozzle assembly then can be used to provide a message to the user encouraging that user to travel to an identified location remote from the pump (e.g., the store or station associated with that pump) to receive an incentive. That message can be provided as an audio message provided through a speaker located on the pump or on the nozzle assembly, or as a video message provided on a video screen located on the pump or on the nozzle assembly. The user that travels to that identified remote location then is provided with information associated with that incentive. For example, the user traveling to the store or gasoline station may be awarded information about a prize for playing a game.

Referring to Fig. 2, there is shown a boot 40 (shown partially in phantom) that is exemplary of the design of a boot of the present invention. The exemplary boot includes a housing 45 that preferably has been integrally molded into the boot and thereby forms a part of that boot. The housing 45 is utilized to house the various components of the communication system 48, such as the communication components 54, speaker 56 and the battery 84. The boot is overall generally tubular in shape and is generally hollow to provide an open chamber extending longitudinally therethrough. As such, the upstream or back end 110 has a relative large opening 112 in order to allow fit over the handle region of the nozzle assembly, and the downstream or front end 115 has a relatively small opening 117 in order to allow fit over a portion of the spout of the nozzle assembly. Although not shown, the boot can possess regions on its top region 120, or on the right and/or left sides thereof for the positioning of placards for conveying text messages (e.g., advertising messages).

The housing 45 in the upper region of boot 40 provides an open chamber or hollow region into which communication components 54 of the communication system 48 can be positioned. The back wall or face 58 is adapted to have a series of open pores or perforations 60, or is equipped with a mesh, screen or other means to allow sound from the speaker 56 to exit the boot and sound from the user to enter the boot and be picked up by the microphone. The housing possesses a bottom 124, front 126, back 58 and side walls to support those components. The housing also can have a portion of the top region thereof provided as an opening to allow portions of certain components to protrude. The housing can be adapted to have movable or releasable portions to allow easy removal and insertion of components, such as for reconditioning and upgrading of selected components. In addition, the chamber can be configured in such a customized shape to allow for a pre-determined, organized positioning of the various components therein.

The boot 40 includes a communication system 48 possessing a viewing face 64. The viewing face includes a pad or face 66, and a plurality of small lights 70. Mechanical and/or electronic components of the game system can be positioned in an upper boot region 127 between the game face 66 and the communication system 48. A transparent protective cover 68 covers and protects the components (e.g., lights 70) exposed on the viewing face 66. The transparent face is adapted to be held in place relative to the remaining portion of the boot by friction fit within a molded groove within the boot and/or using a suitable adhesive.

Referring to Fig. 3, the boot 40 is viewed from the front end 115 or spout end thereof. The boot possesses an opening 117 in its lower end through which the spout (not shown) extends. The upper portion of the boot possesses the communication system 48 supporting the roulette-type game. Components of the communication system 48 can be positioned in housing 45 (shown in phantom) as well as the upper region 127 of the boot.

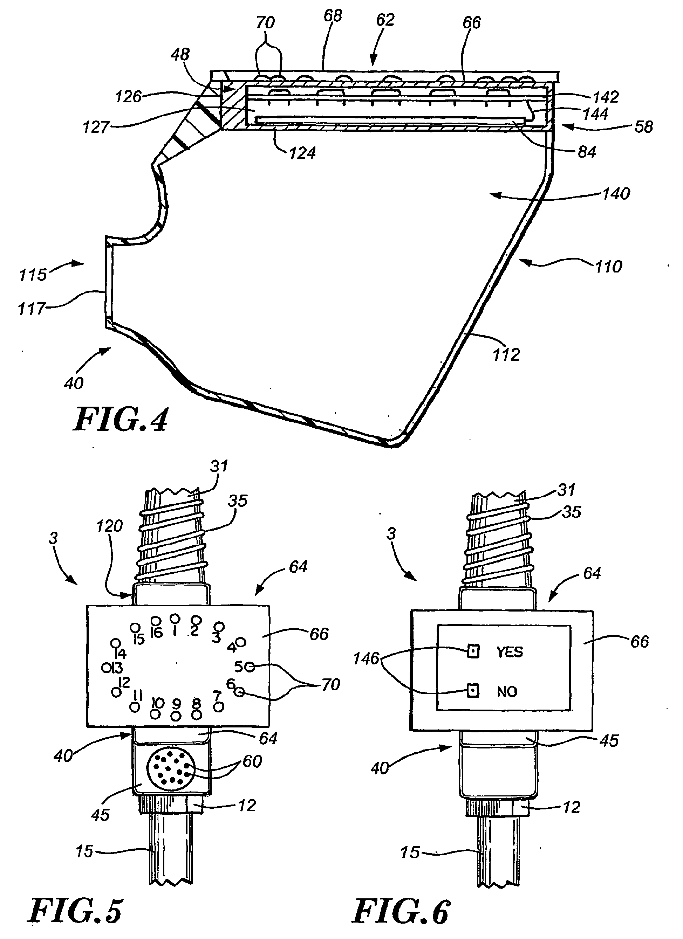

Referring to Fig. 4, a cross section of the boot 40 is seen. The boot incorporates a hollow region 140 to accommodate the nozzle frame (not shown) of the vehicular fuel dispensing nozzle over which the boot is positioned. The hollow region 140 is located below the housing 45 for the communication system 48. For the alternate layout of the communication system 48 that is shown, alternate designs of the battery 84 and the integrated circuit board 142 are shown, and the speaker is not shown. The battery 84 is shown as being connected to the integrated circuit board 142 of the communication system 48 by conductive connection wire 144.

Referring to Fig. 5, there is shown a top view of a portion of the nozzle assembly 3, including boot 40. That view of the nozzle assembly is comparable to that observed by anyone using the nozzle assembly under normal conditions of use. The nozzle assembly incorporates a game system. There is shown boot 40 and housing 45 incorporating a communication system 48 that is selected so that game face 66 that is shown in Fig. 3 appears as a roulette-type game. A series of perforations 60 on the top and back face of the boot provides sound from a speaker located inside the boot to emanate from the boot. Printed indicia (e.g., game directions, pictures, advertising information, logos, numbers or letters) on the game face are shown as printed numerals from 1 to 16. For the exemplary roulette-type game, the face of the communication system includes a series of lights 70, and each light is associated with a corresponding designated number or symbol. The flashing of the individual lights simulate the movement of a ball on roulette wheel. The individual lights are electronically controlled such that when stimulated, each light is illuminated momentarily in quick sequence and in so doing simulates a ball's position and final stationary position on a roulette wheel. Alternatively, a dice game can be simulated in a similar manner by providing a configuration of lights in which there are six lights, and the electronics of the game are designed to control the lights in order that certain lights simulate the dots of the face of a die. For example, if two lights are lit, then the die would show a two, or the location where the light remains lit indicates the winning item that is graphically displayed.

A desired game can be readily provided through the use of an appropriately programmed integrated circuit. The exact electronic components associated with such types of games are not complex, and suitable types of electronics can be found in many marketed entertainment and recreational products. The electronic components also can be readily assembled from commercially available kits of relevant component parts. Known electronics can be programmed to provide computer games, such as Pac Man or Video Poker. Lottery type games, card games also can be provided. Other games can include simulated sports games, such as car racing, baseball, football, basketball, soccer, hockey, and the like. Other games can include those types of games found in commercially available hand held electronic systems, and can be viewed using suitable viewing screens. Such types of games typically are presented using LED, or preferably LCD, types of technologies. Yet other games can include, for example, quizzes regarding trivia (e.g., sports or movie quizzes). Preferred games are those that can be carried out in the size available on the nozzle assembly that is employed in accordance with the invention. Although less preferred and less practical, games also can include checkers, dominos, chess, dice, poker, choose a number, and the like, or "take-off" games based on those types of games.

Games can include games of chance, or promotional games designed to provide a souvenir, discount, premium or reward to a customer. Participation in the games can be for recreational or entertainment purposes, or can involve incentive or promotional features, such as the awarding of gifts, prizes, or the like. Surveys can be conducted for entertainment value, and the results can be compiled and published at a later date. As such, the consumer is provided with some additional reason or desire to return to a particular service station or convenience store. In addition, the system can be programmed so as to allow the user to participate in the playing of a game if that user listens to a particular message or provides input to a survey.

Referring to Fig. 6, there is shown a top view of a portion of the nozzle assembly 3. There is shown boot 40 and housing 45 incorporating a communication components 54 that has the form of a selection system 146. That is, the nozzle assembly 3 includes a pad or face 66 that is adapted to be an information collection module. The user can use keys 146 on the face of the pad 66 to answer questions or prompts provided on the face of that pad, from the pump, from audio communication or from a stationary placard. Within housing 45 of boot 40 is positioned a message board. As shown, the message board allows the user to answer "yes" or "no". Additional selections can include "erase," "restart," "replay," and the like, in order to allow the user to control the desired input and output associated with the nozzle assembly. Other answer selections can be provided, and the specific selection can be a matter of choice. Such a design is particularly desirable for allowing the user to engage in the playing of an interactive game or in responding to a survey. In addition, the design is desirable for allowing the user to select the language that audio and/or video messages are conveyed. For example, the user can request that information to be provided in English, Spanish, German or French; or that written information be provided in a special character or text, such as Japanese or Russian. Alternatively, the message board can possess a dial that can be used by the customer to control the volume of the audio system associated with the nozzle assembly. For example, the dial can control the output through an amplifier associated with the speaker of the nozzle system. See, also, for example, UK Patent Application 2,147,273.

The communication system 48 can be adapted to receive various types of information from the user, and for the user to input information in various ways. The user can convey information by pressing pressure sensitive keys 146 (e. g., such as keys on a keypad or keyboard), touching a video touch screen, turning knobs, by switching a toggle-type switch, or by employing other suitable switching, triggering or selection means. See, for example, the types of technologies described in U.S. Patent Nos. 5,504,675 to Cragun et al and 5,657,004 to Whittaker et al. Information can be conveyed from coded systems, such as bar coded systems, by providing the user with a bar coded identification card, and by incorporating in an appropriate manner a corresponding bar code reader into the boot. Exemplary types of bar code systems are available from Portable Products, Inc., Sun Max and Intermeric Technologies Corp. See, also, the types of technologies described in U.S. Patent No. 5,630,071 to Sakai et al. Other suitable systems include those that incorporated the type of technologies associated with the Mobil Speed Pass that are provided by Texas Instruments. Information can be provided about a particular user, such as a pre-approved user, by incorporating a finger or thumb print sensing device into the boot. Visual information can be received by incorporating a small video camera (not shown) into the boot. Audio information can be received by incorporating a microphone (not shown) into the boot. Voice or sound activation of the system can be accomplished, for example, by using the types of technologies available from Portable Product, Inc. For each of the foregoing devices, the information received by those devices is appropriately stored, but most preferably is transmitted to a remote location for collection and processing. Transmission of those types of information can be accomplished through the previously described hard wire or wireless transmission mechanisms.

The communication components 54 can be adapted to receive information through a counter or counting mechanism (not shown). For example, for a communication system that offers the user a choice to receive audio and/or video messages in a particular language (e.g., English or Spanish), an electronic counter mechanism can record the number of times that various selections are made. In such a manner, the store operator is provided with a way to gather certain demographic information surrounding the use of the pump.

The communication system 48 can be adapted to receive various types of information in various other ways. For example, information concerning the environment in the vicinity of the nozzle assembly can be received. That information can be conveyed to an appropriate location in a desired fashion. For example, the boot 40 can be equipped with a smoke sensor, a temperature sensor, or other suitable sensing means (not shown). In the event that those sensors become activated, for example, by the presence of smoke or fire, an alarm positioned within the boot can sound and/or a distress signal can be transmitted to a remote location. The alarm system can be adapted to use the speaker of the system to convey an audio alarm.

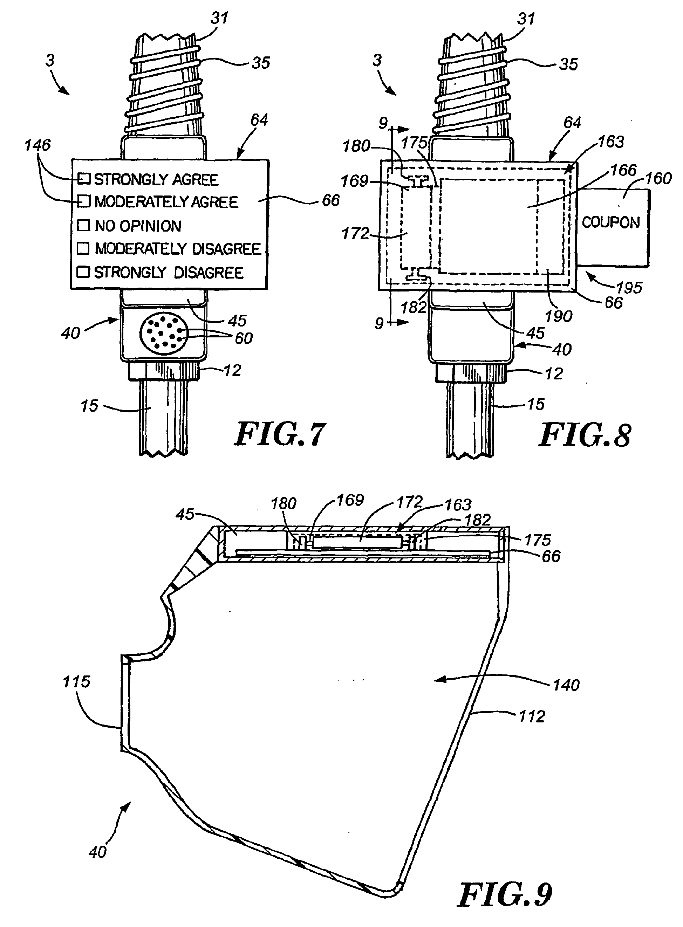

Referring to Fig. 7, boot 40 includes a pad that is adapted to conduct a survey. A selection system, such as keys 146, can be pressed to enter an answer or opinion associated with that key. In one preferred embodiment, the question or statement that prompts the user to respond can be conveyed as an audio message from a speaker located within the nozzle assembly. In this regard, the information entered can be used to gather demographics, consumer preferences, conduct surveys, satisfy placed orders, and the like. The information so provided by the customer can be stored within the communication system of the nozzle assembly for collection and processing at a later time. Alternatively, the information provided by the customer can be conveyed to a remote location for processing. A clock or other timing mechanism located within the communication system can allow the station or store operator to relate the survey response to a date and time. Gathered data can be collected and processed using the general types of techniques set forth in U.S. Patent Nos. 5,724,521 to Dedrick; 5,732,218 to Bland et al.; 5,794,210 to Goldhaber et al. and 5,794,207 to Walker et al.

Referring to Fig. 8, there is shown (partially in phantom) a top view of a portion of the nozzle assembly. Boot 40 includes a pad 66 that is adapted to dispense a coupon 160. That is, within the housing 45 of boot 40 is positioned coupon dispensing system 163. The coupon dispensing system 163 can be used to provide a customer with an award associated with the playing of a game of the type previously described with reference to Fig. 5. As such, the integrated circuitry employed for the previously described game systems can be incorporated into the housing 45 of the boot, and the previously described game faces can be positioned on the top region of the boot, above the coupon dispensing system.

A representative coupon dispensing system 163 includes a coupon printer 166 and roller 169 carrying a long strip of material 172, such as paper, for coupons, or carrying a series of coupons connected together at a series of perforation points or score lines. The perforation lines or score lines extend generally perpendicular to the longitudinal axis of the paper strip. The roller 169 is situated within a delivery mechanism 175 that includes stanchions 180, 182 for supporting the roller. The strip paper 172 passes through a coupon printer 190. The printed coupon 160 then exits the dispensing system 163 in delivery region 195. The coupon 160 can be tom off along a line of perforations, along a score line, or torn off along the edge of the dispensing system. Suitable printers and drivers are available commercially, for uses such as at pay-at-the-pump establishments. An exemplary type of printing mechanism is available as Model CP 205 MRS from Advanced Printing Systems. Other suitable printing mechanisms are available from Datamax Corp. and Addmaster Corp.

Another representative coupon dispensing system 163 can include a roller 169 carrying a strip of paper 172. The strip of paper can have a series of perforation points or score lines separating a series of pre-printed coupons 160. Such a system 163 does not require a printer. In use, the coupon is dispensed from the system by a controlled turning of the roller at a predetermined time for a predetermined period of time. As such, the paper is rolled off of the roller in order that the coupon extends from the dispensing system. The turning of the roller is accomplished using an appropriate mechanical paper feeding mechanism controlled by a microprocessor that is a component of the communication system 48. Such a system is particularly desirable for delivering coupons made from paper, thin plastic, laminated paper/foil materials or laminated plastic/foil materials.

Referring to Fig. 9, the boot 40 possesses the roller 169 carrying a roll of paper 172. The delivery mechanism 175 of the coupon dispensing system 163 is shown. The integrated circuitry, power source, and other relevant components are not shown. The coupon can be dispensed from one side of the nozzle assembly, or if desired, the system can be arranged in order that the coupons are delivered in a different manner. For example, the coupons can be dispensed from another location (e.g., the top, front or back face) of the nozzle assembly.

In an alternate but less preferred embodiment, a stack of individual pre-printed coupons can be positioned within a storage region of the coupon delivery system within the nozzle assembly. Each coupon the can be dealt from the delivery system using a suitable delivery mechanism controlled by a microprocessor.

Components used to provide delivery of the coupon can include a variety of electronic and mechanical components, and those types of components can be readily adapted from the types of coupon delivery systems that have been developed for numerous other applications. There are numerous known systems, including the mechanical components and electronic controls, for delivering receipts and coupons; and the components of the present invention can be readily adapted from those types of designs, components, materials and technologies. For example, the general types of components suitable for delivering coupons can be based on those designs, components and technologies used to deliver receipts at automatic bank teller machines, receipts for pay at the pump gasoline purchases, and next in line numbers for customers at the service counters of grocery stores.

The coupons that are delivered from the nozzle assembly can serve a variety of purposes. Coupons can be dispensed as receipts. Coupons can be provided as collectible or novelty items for customers to save. Coupons can be provided as game pieces for a promotional game sponsored by the proprietor of the convenience store or gasoline station associated with the pump (e.g., each coupon can have the form of a card for a card game or a piece of a puzzle, and the consumer is encouraged to return on numerous occasions to collect a winning hand or solve the puzzle). Coupons can provide a customer with a reason or incentive to return to a particular convenience store or service station at a later date. For example, each coupon can be used to provide a customer with an opportunity to collect bonus points that can be redeemed for an award. Coupons can provide a customer with reason to enter the convenience store or service station in response to an incentive, such as to claim a prize or to receive a discount on an item.

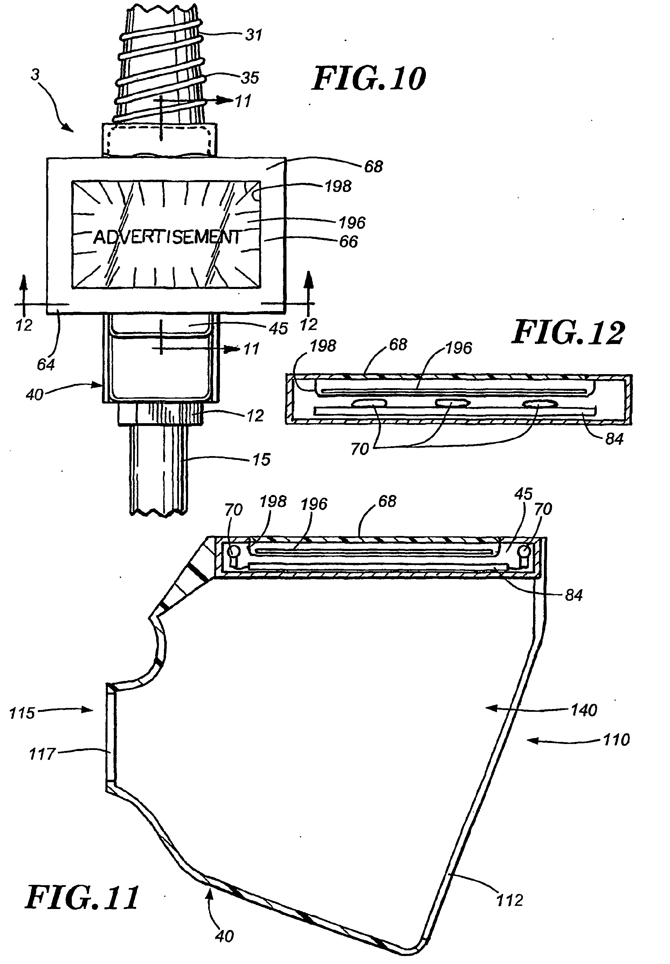

Referring to Figure 10, there is shown a top view of a portion of the nozzle assembly, and within housing 45 of boot 40 is positioned a illuminated visual message board 196, such as a pad 66 that is adapted to possess an illuminated region that provides a message. The viewing face 64 is covered by a transparent shield 68. The message board is held in place and protected by a suitable positioning mechanism 198. The positioning mechanism preferably is produced from a plastic material, and is adapted so as to provide snug positioning of the message board. The information supplied by the message board 196 can be news, weather, sports, local traffic conditions, current date and time, current temperature, current air quality conditions, current atmospheric conditions, and the like. The information can be received from a remote source and transmitted to the boot 40 for retransmission to the user. Alternatively, the information is generated by appropriate devices (e.g., a thermometer or a clock) positioned within the nozzle assembly. The illuminated region can be configured so as to flash on and off, such as when the fueling system is ready to dispense fuel or when the dispensing of fuel is complete. Such information can be provided from a suitable connection to a computer network system. The nozzle assembly also can comprise components for delivering an audio message.

Referring to Figs. 11 and 12, boot 40 includes a board that is adapted to convey a message. That is, within the housing 45 of boot 40 is positioned liquid crystal system, or other suitable means for providing a graphic display 196. The system has a transparent protective cover 68, in order that the message on the graphic display 196 can be readily viewed. If desired, option backlighting can be provided by a series of lights 70 powered by power source 84. The lights 70 can be positioned so as to provide back, edge, side or perimeter lighting. The system can provide alpha-numeric information, but most preferably, the system provides display of pictures, symbols, and the like, as well as movable objects. An exemplary LCD is available as Model No. FO2020 from Purdy Electronics Corporation.

The illumination system most preferably is employed in conjunction with at least one other feature, such as an audio system, a game system and/or a coupon system (not shown). For example, a game system can include illuminated lights, audio and video systems can be synchronized in order to provide an effective medium for conveying both audio and video messages, or selection buttons associated with survey choices can illuminated. Alternatively, a thermometer positioned within the nozzle assembly can sense environmental conditions, and the current temperature can be displayed on an illuminated on a screen on the nozzle assembly and conveyed as an audio message through the speaker associated with the nozzle assembly. Flashing lights and a warning sound emitted through the speaker can provide an effective warning message to the user.

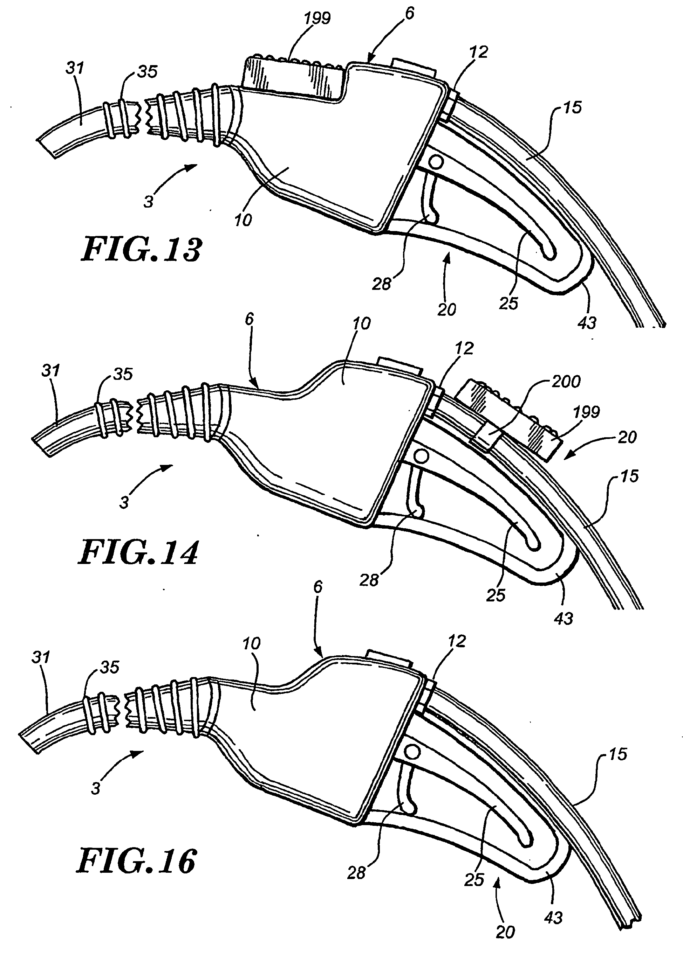

Referring to Fig. 13, a vehicular nozzle assembly 3 includes a nozzle with frame 10 and spout 31. The nozzle assembly is of essentially standard design and has a modular cartridge 199 and associated components attached thereto. The cartridge 199 is mounted at the forward top face of the nozzle frame 10, adjacent to the spout 31 portion of the nozzle assembly. The cartridge 199 contains the various added features and components (and combinations thereof) that have been described hereinbefore with reference to the boots of the present invention. The nozzle frame 10 may be designed in order that the cartridge can be configured so as to fit in a customized location therewithin. Alternatively, the cartridge can be designed to be fitted to the nozzle frame, and to be attached to that frame by adhesive, screws, clamps, or other suitable fastening means.

Referring to Fig. 14, a nozzle assembly 3 includes a nozzle with frame 10 and spout 31. The nozzle assembly is of essentially standard design and has a modular cartridge 199 and associated components mounted on the hose 15. The cartridge 199 is positioned on the hose immediately adjacent the back nozzle so as to be viewable and usable when the user is handling the nozzle assembly. The cartridge 199 contains the various added features and components (and combinations thereof) that have been described hereinbefore with reference to the boots of the present invention. The pad is secured (e.g., with a clamp or a belt) to the hose using a securable band 200, that can be manufactured from metal, fabric, plastic, or the like.

The nozzle assemblies of the present invention can be designed in order that the aforementioned components can be incorporated as a component part of that assembly. As such, a nozzle assembly can be customized in order to have a housing or compartment that is designed to act as a housing for various of the communication components 54 that provide the various features of the present invention. As such, the nozzle assembly 3 can have those various components incorporated as integral components thereof. The specific design details relating to such a nozzle assembly will be a matter of choice. In addition, the selection of components, configuration of components, and overall adaptation of components for the aforementioned nozzle assemblies can be based on the teachings of U.S. Patent Nos. 5,184,309 to Simpson et al., 5,365,984 to Simpson et al. and 5,458,170 to Ferguson, which are incorporated herein by reference.

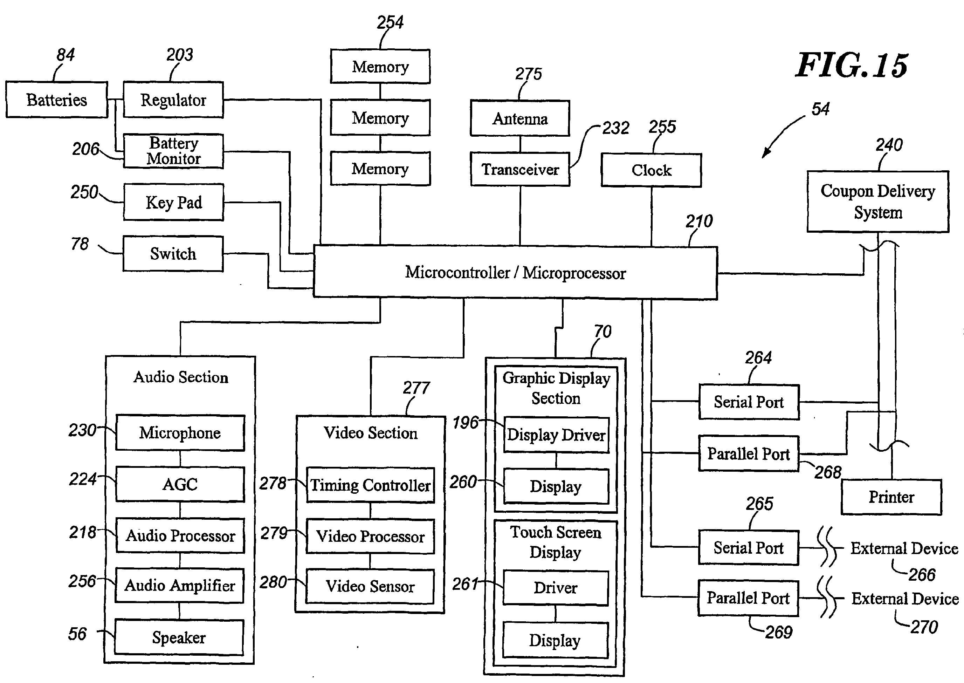

The foregoing embodiments preferably incorporate electronic circuitry of the type shown schematically in Fig. 15. In particular, the communication components 54 include the representative circuit that comprises a power source 84, a switching mechanism 78 (e.g., a position sensitive mercury switch), a regulator 203, voltage monitor 206, a microcontroller 210 and various communication components. The operations of the various communication components are controlled by the microcontroller. An audio system can comprise an audio processor 218, an audio amplifier 220, a speaker 56 and an automatic gain control 224. A microphone 230 can receive an audio signal, and the signal can be stored by the audio processor 218 or transmitted from transceiver 232 to a remote location. The microcontroller 210 also can control the activation, deactivation and operation of the coupon delivery system 240. A key pad 250 can provide for entry of information (e.g., such as in the conducting of a survey) for storage and transmission by microcontroller 210 and the transceiver 232. A survey system that collects information entered by key pad 250 can store or otherwise save information using the microcontroller 210 and a suitable storage device 254. Illumination preferably is provided on a graphic display system 70. Software for games can be programmed into the microcontroller 210.

A representative storage device 254 is an electrically erasable programmable read only memory (EEPROM) device that provides for storage of digital data. Such digital data may be stored, (i.e., written) to the device 254, and retrieved (i.e., read) from the device by the microcontroller or microprocessor 210. A suitable data storage device is Part No. 93LC46 form Microchip. Other exemplary devices include National Semiconductor Part Nos. NM93C06, NM93C46 and NM93C56; and Microchip Part Nos. 93LC46A and 93LC56.

The power source most preferably includes a battery 84, a regulator 203 and a battery monitor 206. Batteries supply power to the regulator, which in turn regulates the voltage that is supplied to all or most of the electronic components, including the selected chips that compose the integrated circuit. The battery voltage level is monitored by a monitor chip 206, such as Maxim No. MAX 809. At a predetermined voltage, the monitor chip sends an interrupt signal to the mirocontroller 210, which then takes appropriate action as dictated by program code. For example, the action can cause stoppage of all system activity to conserve battery power.

A regulator 203 is an electronic device that automatically holds a quantity, such as voltage or current, to a constant value. For example, electrical input of a particular voltage supplied by a power source (e.g., a battery, power supply or another regulator) 84 is then converted to a specific different desired voltage and supplied to the output of the regulator 203. The output voltage, in turn, provides this desired voltage to other systems or electrical devices within the circuit. Exemplary regulators are available as National Semiconductor LM317, LM341 and LM1578; Linear Technologies LT1129, LT1170 and LT1121; and Maxim Integrated Products MAX 1684, MAX 1685 and MAX 1623. A preferred regulator is available as Linear Technologies LT 1129.

A microcontroller 210 is a highly integrated single-chip microcomputer. Some of the key elements of a microcontroller include a central processing unit (CPU) to process information, program memory to store instructions, data memory to store information, system timing, real timing and input/output sections for communication. Preferred microcontrollers contain real time clocks 255. The microcontroller and the programming thereof can vary. Exemplary devices include those types of microcontrollers selected from the National Semiconductor COP8 series, the Microchip PIC12 series, the Zilog Z8 and Z8 Plus series and Motorola M68HC11. Preferred microcontrollers are the National Semiconductor COP8 series devices, and information concerning those types of devices can be found in Nation Semiconductors, COP8 Microcontroller Data Book 1996/1997 edition.

A preferred audio processor 218 is available as ISD Voicecorder IC from Information Storage Devices Inc. Such an audio processor employs a storage technique called digital analog storage technology (DAST). Such an audio processor stores audio information. Serial communication lines on the processor allow the microcontroller 210 to send commands to that processor 218 (e.g., play, record, stop, fast forward, and the like). During the record cycle, audio information is applied to the audio input of the processor 218. This audio information may be from a microphone via the AGC circuit 224 or other external sources such as a computer, compact disk player, equalizer, or the like. The AGC circuit 224 adjusts the audio input level to the required level of the processor. Within the audio processor, the audio information is conditioned and sampled at some sampling rate. Each sample result is then stored in an on-chip nonvolatile memory array with the audio processor. During the play cycle, the stored audio information is passed through filters and smoothed, and then output from the processor to an audio amplifier 256, which boosts the signal to levels required to drive the speaker 56. Many audio amplifiers 256 are available from several manufacturers. Exemplary devices include National Semiconductor Part Nos. LM4860 and LM4861; and Motorola Part Nos. MC13060 and MC34119.

An alternate audio system can make use a voice-band audio processor (VBAP). During record, the VBAP device receives audio information in the same manner as the previously described audio processor 218. Inside the VBAP device, the audio signal is passed through filters and an antialiasing circuit, and then to an analog to digital converter (A/D). The resultant data, under control of the microcontroller 210, is clocked out of the device and stored in memory 254, such as EEPROM or nonvolatile random access memory (NVRAM ). During play, the microcontroller shifts the desired stored data from the memory 254 to the data in pin (DIN) of the VBAP. The data is passed through a digital to analog converter (D/A), and then through switched capacitor filters, which condition and smooth the signal. The signal then is passed through an amplifier within the VBAP, and output the data out pin (DOUT). This signal is then passed to the audio amplifier 220 to be amplified to a level needed for the speaker 56. An exemplary VBAP is Texas Instrument Part No. TCM320AC36.

The visual display system 70 can vary. Numerous visual display systems are available, and the exact selection can be a matter of choice. Criteria used in the selection of the visual display system include cost, durability, and the like. A typical visual display system includes a LCD display 260 and a LCD display driver 196. An exemplary visual display system is a FE0202 LCD display manufactured by Purdy Electronics Corp. An exemplary driver is a Maxim IMC7211. The driver 196 decodes data and conditions signals for the LCD display 260, as well as reduces the workload on the microcontroller 210. In operation, each letter, number or graphic character is designated a specific code. When it is desired to display one of those characters, the microcontroller via communication lines passes the associated code to the display driver. The microcontroller passes another code to the display driver, informing the driver of the location of the character on the display. The display driver then decodes this information and activates the appropriate pins on the LCD display. The graphic display system 70 also can include a touch screen display 261.

Input and output of information can be provided in a variety of ways. Serial data as it pertains to electronic applications, pertains to the performance of steps, or the occurrence of elements, (e.g., data items) in succession, and an order, row, or sequence in which one item follows another. There are a multitude of methods available to accomplish the transmission and reception of serial data. The most common method utilizes a universal asynchronous receiver/transmitter (UART). The UART receives and transmits information from a microcontroller 210, and transfers that information to and from a remote device (i.e., a device being removed or not a component of the microprocessor). Many microprocessors contain a UART as do some of the National Semiconductor COP8 series components. Signals can be conditioned in a way to protect or isolate the devices in communication with each other. Several standards have been developed to define the protection method of serial data exchange, and those include RS232C, RS422 and RS485. An example of a UART/RS232 transceiver that is directly compatible with most microcontrollers is the Maxim MAX3110E; which is a UART combined with an RS232 transceiver. Most higher end microprocessors will have at least one UART built into those devices; and in such a case, all that is needed is an appropriate transceiver such as RS232, RS422 or RS485. Serial ports 264, 265 can communicate information with another compatible electronic devices 266.

Parallel communication pertains to the type of operation in a logical electronic system when all elements in an information item (e.g., bits in a word) are acted upon simultaneously rather than serially. Parallel ports 268, 269 are ports that provide communication to external devices 270. The parallel ports operate under the IEEE 1284 "Standard Signaling Method for a Bi-directional Parallel Peripheral Interface for Personal Computers" standard. Microcontrollers can utilize one or a combination of many available parallel communication chips 268, 269 to provide communication with external devices 270. One such parallel communication chip is the Fairchild Semiconductor 74LVX161284 Low Voltage IEEE 161284 Translating Transceiver.

The transceiver 232 can provide effective bi-directional transfer of wireless information. Many methods are available to accomplish wireless transmission of information. Application, distance, environment, available frequency bandwidth and system configuration are just a few criteria which determine the best choice. Exemplary types of transcivers are the LINX Technologies SC Series RF Transceivers. These transceivers have the ability to transmit and receive digital or audio information in the vicinity of 916 Mbz. The UART compatible output of these transceivers 232 provides easy interface with the microcontroller 210. Information selected to be transmitted is directed by the microcontroller. The information can be audio in form from the microphone 230 and AGC 224, previously stored audio information from the audio processor 218, or digital data directly from the microcontroller (which has access to virtually all information in the system).

The purpose of the antenna 275 is to radiate and absorb electro-magnetic waves in a selected frequency range. Antenna selection is dictated by the transceiver 232 selection. For instance, the LINX SPLATCH Planar Antenna No. ANT916-SP can be used with the previously described transceiver.

The purpose of the camera system 277 is to convert a visual image to representative electronic signals. This is not limited to the human visible spectrum. Many chipsets or complete modules are available to accomplish this. The microcontroller can determine how this information is utilized as in stored, transmitted and so forth. An exemplary camera system is a Sony CXD2463R Timing Controller 278 with the Sony CXA1310AQ Single Chip Processor 279 combined with the Sony ICX404AL Image Sensor 280. This forms a complete system to serve the purpose. The desired image qualities (e.g., black and white, color, resolution, signal format, and the like) needed in a particular system configuration will dictate the choice in available cameras or camera systems.

Referring to Fig. 16, there is shown a representative nozzle assembly 3 of the present invention. The nozzle assembly includes a standard fuel dispensing nozzle 6 including a frame 10, and a connector 12 to a hose 15 from a pump (not shown), in order that fuel from the pump can pass from the pump through the hose to within regions of the nozzle frame. The nozzle assembly 3 includes a handle region 20 that is adapted in order that anyone using the nozzle assembly can readily grasp that assembly. The assembly also includes a hand guard 43, trigger 25 or other suitable means for controlling the flow of fuel through the assembly, as well as an optional manually operated control lever 28 (e.g., a hold-open latch) that is in mechanical communication with a shut off apparatus within the nozzle frame. A generally tubular spout 31 provides a means for directing the dispensing of fuel to the desired location. An optional wound wire 35 around the spout 31 provides a simple way to maintain positioning of the spout within a fuel receptacle (not shown). Most preferably, the frame, spout, handle, trigger, hand guard and numerous internal components are manufactured primarily from plastic materials.

The nozzle assembly 3 can be constructed from two components (i.e., a right hand side and a left hand side) that combine to form a nozzle assembly of the present invention. The two components (not shown) can be combined together to form the nozzle assembly, and those components are fixedly secured together using a suitable adhesive, screws, clamps, or other suitable securing means. The various fasteners can be constructed from metal or plastic materials. Although not shown, the component parts also can include positioning bosses, stabilizing ribs, and the like; and such features are provided in order to facilitate production and assembly of the nozzle assembly, as well as provide integrity and other desirable physical characteristics to the nozzle assembly.

The nozzle assembly 3 includes a spout portion 31, such as a coaxial spout that possesses an inner liquid pathway, and for the most preferred embodiment, an outer vapor pathway (not shown). The preferred assembly also includes a thermoplastic hand guard, and a thermoplastic outer body. The nozzle assembly of the type described with reference to Fig. 16 can be designed and constructed to meet the properties, performance and specifications required for C.A.R.B. approval and U.L. listing.

The nozzle assembly 3 has a size that can be comparable to that of conventional nozzle assemblies. Typical dimensions are about 12 inches to about 15 inches in total length, about 2 inches to about 3 inches in maximum width, and about 8 inches to about 12 inches in total height. The spout assembly has dimensions that can vary. Typically, the spout dimensions are suitable for delivery of unleaded gasoline into the filling region of the gasoline tank of an automobile. The dimensions of the various other components of the nozzle assembly of the present invention can vary. However, the dimensions and overall design parameters are generally comparable to many of those dimensions and parameters of nozzle assemblies that have been employed in traditional commercial applications.

The spout 31of the nozzle assembly 3 can be designed so as to be integral to the remainder of the nozzle assembly. Alternatively, the spout portion can be provided as a separate piece that can be fixedly secured to the remainder of the nozzle assembly. For example, the spout can possess a threaded region at one end, and that threaded region can be secured in place by way of a corresponding threaded region of one end of the nozzle assembly. The spout portion also can be secured in place using a suitable adhesive. Suitable manners for securing the spout portion to the remainder of the nozzle assembly are known. For example, the spout portion can be adapted so as to be secured to the remainder of the nozzle assembly in the manner set forth in U.S. Patent No. 4,682,714 to Wood. Most preferably, the spout is manufactured primarily from a plastic material.

A nozzle assembly 3 is connected to the hose 15 of the dispensing system. This typically is provided by connection to a connector 12, metal swivel assembly, or other suitable connection means, which provides for connection to the hose. Normally, the nozzle assembly possesses a threaded region at the end opposite the spout, and that threaded region is fixedly secured in place by way of a corresponding threaded region of the metal swivel assembly. Connection mechanisms also can possess breakaway mechanisms (not shown). See, for example, U.S. Patent Nos. 4,615,547 to Sutcliffe et al; 4,667,883 to Fink, Jr.; 4,827,977 to Fink, Jr. and 4,828,183 to Fink, Jr. Various types of connection mechanisms are commercially available. For example, representative connection mechanisms, swivels and the like are available from Emco Wheaton Retail Corporation, Catlow Incorporated and Husky Corporation.

If desired, nozzle assembly 3 is equipped with an additive cartridge. For example, the top region of the nozzle assembly can designed so as to possess at least one slot or other housing mechanism by which the suitably designed cartridge (not shown) can snap in place (or otherwise fit by friction fit, or the like) so as to be secured in place. If desired a locking strap can be used to maintain those optional components in place relative to one another. The various optional components have been described previously with reference to the other aspects of the present invention.

The assembled nozzle assembly 3 is designed so as to be capable of providing adequate fuel delivery. Typical preferred assemblies are capable of providing delivery of about 6 to about 14, generally about 8 to about 12, and frequently about 10 gallons of fuel per minute.

The nozzle assembly most preferably is equipped with a flow control valve (not shown), or other suitable means for controlling the flow of fuel through the nozzle. Representative flow control valve mechanisms and designs are set forth in U.S. Patent Nos. 4,343,337 to Healy; 4,453,578 to Wilder; 4,809,753 to Fink, Jr.; 4,825,916 to Fink, Jr.; 4,658,987 to Fink, Jr.; and 5,007,468 to Wilder et al. The nozzle assembly also can possess a shut-off mechanism (not shown), such as a pressure-activated system of the type set forth in U.S. Patent No. 5,992,479 to Simpson.

The nozzle assembly 3 can be equipped so as to minimize the amount of fuel vapors that escape into the atmosphere during use. For example, the nozzle assembly can possesses a series of tubular passages longitudinally therethrough. Representative vapor recovery systems are set forth in U.S. Patent Nos. 4,057,086 to Healy; 4,095,626 to Healy; 4,336,830 to Healy; 4,566,504 to Furrow et al. and 5,197,523 to Fink, Jr. et al. 5,327,944 to Healy. The nozzle assembly can be equipped with a vacuum assist vapor recovery system of the type set forth in U.S. Patent No. 4,429,725 to Walker et al. The nozzle assembly can be equipped with a bellows assembly; such as is set forth in U.S. Patent Nos. 4,056,131 to Healy; 4,343,337 to Healy; 5,085,258 to Fink, Jr. et al. Typical bellows assemblies are manufactured from polyurethane materials. Alternatively, the nozzle assembly can be equipped with a plastic guard; such as the type set forth in U.S. Patent No. 4,010,781 to Sutcliffe.

The useful lifetime of such types of nozzle assemblies can vary, depending upon factors such as environmental conditions, degree of abusive treatment and frequency of use. Typically, a nozzle of the present invention possesses a useful lifetime, under conditions of normal use at a service station or convenience store, of at least 1 month, and preferably of at least 3 months. The nozzle assemblies can be manufactured efficiently and effectively from low cost components. The nozzle assemblies, or components thereof, can be readily replaced. Used nozzles, due to their simple design and the preferred limited number of components, can be readily recycled for further use. Such properties, make the nozzles desirable from an economic standpoint; that is, the nozzles of the present invention can be manufactured, maintained and replaced much more economically that conventional nozzle assemblies.

Preferred nozzle assemblies constructed from thermoplastic materials are relatively light in weight, and can weigh significantly less than conventional nozzle assemblies. Typical preferred nozzle assemblies, and that are designed for use at service stations and convenience stores, weigh less than about 1,134 kg (2.5 pounds), and most preferably less than 0,907 kg (2 pounds). The unique spouts of those nozzle assemblies have a propensity not to scratch or chip the painted finish of automobiles, as do conventional metal nozzle spouts. In addition, by suitable selection of the plastic material and design of the nozzle assembly, the nozzle assemblies possess the "break away" or "drive away" safety features of the type described within U.S. Patent No. 5,363,889 to Simpson et al.

The nozzle assembly 3, as well as other nozzle assemblies such as those presently in commercial use, can be equipped with a sensing gauge (not shown). Such a sensing gauge is provided to detect proper ground (or lack of proper ground). As such, the user of a dispensing system can be alerted that the system is adequately grounded. Other safety devices, such as carbon monoxide monitors, heat sensors, smoke detectors, and the like, can be incorporated into the nozzle assembly. As such, certain environmental conditions can be sensed, and appropriate audio or visual alarms can be activated.

If desired, the nozzles assemblies of the type described with reference to Fig. 16, can be equipped with further additive features, such as those boot or placard assemblies that can provide advertising, messages or other features. Representative additive assemblies for fuel dispensing nozzles are set forth in U.S. Patent Nos. 4,465,209 to Wilder, 5,058,637 to Fell; 5,458,170 to Ferguson; 5,806,217 to Alvem; 5,810,063 to Alvern; 5,815,967 to Alvern; 5,865,340 to Alvern; 5,862,617 to Alvem; and 5,887,367 to Alvem. Of particular note are the Fueling Talker electronic advertising boots that are fitted onto the nozzles of gasoline dispensing systems by DirectCast Network, LLC. Other advertising and display systems suitable for use are set forth in U.S. Patent Nos. 5,134,716 to Craig and 5,642,484 to Harrison, III et al.

## Claims

1. A boot (40) adapted to fit over at least a portion of a vehicular fuel dispensing nozzle (6), **characterised in that** the boot comprises means for providing an interactive game (54).

2. A boot as claimed in claim 1 further comprising means for delivering coupons (163).

3. A boot as claimed in claims 1 or 2 further comprising a counting mechanism (54) for sensing the number of times that the nozzle is employed.

4. A boot as claimed in any of the preceding claims comprising at least one of means for providing illumination (70) and means for conveying a sound or an audio message (56).

5. A boot as claimed in claim 4. wherein the means for providing illumination is means for providing graphic display (196).

6. A boot as claimed in any of the preceding claims comprising means for permitting a user of the nozzle to input information (146).

7. A vehicular fuel dispensing nozzle (6) assembly **characterised in that** the nozzle comprises means for providing an interactive game (54).

8. A nozzle as claimed in claim 7 further comprising at least one of means for providing illumination (70), means for conveying a sound or audio message (56) and means for permitting a user of the nozzle to input information (146).

9. A nozzle as claimed in claim 8 wherein the means for providing illumination is means for providing graphic display (196).

10. A nozzle as claimed in claims 7 to 9 comprising means for delivering coupons (163).

## Patentansprüche

1. Schutzmanschette (40), die dazu eingerichtet ist, auf mindestens einem Abschnitt eines Kraftstoffabgabestutzens (6) für Fahrzeuge zu sitzen, **dadurch gekennzeichnet, daß** die Schutzmanschette Mittel (54) zum Bereitstellen eines interaktiven Spiels umfaßt.

2. Schutzmanschette nach Anspruch 1, ferner mit Mitteln (163) zur Ausgabe von Coupons.

3. Schutzmanschette nach Anspruch 1 oder 2, ferner mit einem Zählmechanismus (54) zum Erfassen der Häufigkeit, mit weicher der Stutzen eingeführt wird.

4. Schutzmanschette nach einem der vorhergehenden Ansprüche, die zumindest Mittel (70) zur Bereitstellung einer Beleuchtung und/oder Mittel (56) zum Übermitteln eines Tons oder einer Audionachricht umfaßt.

5. Schutzmanschette nach Anspruch 4, bei der die Mittel zur Bereitstellung einer Beleuchtung Mittel (196) zur Bereitstellung einer Graphikanzeige sind.

6. Schutzmanschette nach einem der vorhergehenden Ansprüche, die Mittel (146) umfaßt, mit denen ein Benutzer des Stutzens Informationen eingeben kann.

7. Kraftstoffabgabestutzen-Anordnung (6) für Fahrzeuge, **dadurch gekennzeichnet, daß** der Stutzen Mittel (54) zum Bereitstellen eines interaktiven Spiels umfaßt.

8. Stutzen nach Anspruch 7, der zudem zumindest Mittel (70) zur Bereitstellung einer Beleuchtung, Mittel (56) zum Übermitteln eines Tons oder einer Audionachricht und/oder Mittel (146), mit denen ein Benutzer des Stutzens Informationen eingeben kann, umfaßt.

9. Stutzen nach Anspruch 8, bei dem die Mittel zur Bereitstellung einer Beleuchtung Mittel (196) zur Bereitstellung einer Graphikanzeige sind.

10. Stutzen nach den Ansprüchen 7 bis 9, mit Mitteln (163) zur Ausgabe von Coupons.

## Revendications

1. Gaine (40) adaptée pour s'ajuster sur au moins une partie d'une buse de distribution de carburant pour véhicule (6), **caractérisée en ce que** la gaine comprend des moyens pour fournir un jeu interactif (54).

2. Gaine selon la revendication 1 comprenant de plus des moyens pour distribuer des coupons (163).

3. Gaine selon la revendication 1 ou 2 comprenant de plus un mécanisme de comptage (54) pour détecter le nombre de fois que la buse est utilisée.

4. Gaine selon l'une des revendications précédentes comprenant au moins soit des moyens pour fournir de l'illumination (70), soit des moyens pour délivrer un son ou un message audio (56).

5. Gaine selon la revendication (4), **caractérisée en ce que** les moyens pour fournir de l'illumination sont des moyens pour fournir un affichage graphique (196).

6. Gaine selon l'une des revendications précédentes comprenant des moyens pour permettre à l'utilisateur de la buse d'entrer de l'information (146).

7. Ensemble de buse de distribution de combustible pour véhicule (6), **caractérisé en ce que** la buse comprend des moyens pour fournir un jeu interactif (54).

8. Buse selon la revendication 7 comprenant de plus au moins soit des moyens pour fournir une illumination (70), soit des moyens pour distribuer un son ou un message audio (56), soit des moyens pour permettre à l'utilisateur de la buse d'entrer une information (146).

9. Buse selon la revendication 8, **caractérisée en ce que** les moyens pour fournir une illumination sont des moyens pour fournir un affichage graphique (196).

10. Buse selon l'une des revendications 7 à 9 comprenant des moyens pour distribuer des coupons (163).
